(19) Europäisches Patentamt
European Patent Office
Office européen des brevets

(11) **EP 4 625 053 A1**

(12) **EUROPEAN PATENT APPLICATION**

(43) Date of publication:
01.10.2025 Bulletin 2025/40

(21) Application number: 25164068.6

(22) Date of filing: **17.03.2025**

(51) International Patent Classification (IPC):
*G03G 9/087* (2006.01)    *C08F 212/08* (2006.01)
*C08F 220/12* (2006.01)    *C08F 220/14* (2006.01)
*C09D 125/04* (2006.01)

(52) Cooperative Patent Classification (CPC):
(C-Sets available)
G03G 9/08711; C08F 212/08; C08F 220/12;
C08F 220/14; C09D 125/14    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2024 JP 2024052549
21.01.2025 JP 2025008658**

(71) Applicant: **FUJIFILM Business Innovation Corp.
Minato-ku
Tokyo (JP)**

(72) Inventors:
• **FURUTA, Tsutomu**
  **Minamiashigara-shi, Kanagawa (JP)**
• **ISHIZUKA, Daisuke**
  **Minamiashigara-shi, Kanagawa (JP)**
• **SAITO, Erina**
  **Minamiashigara-shi, Kanagawa (JP)**
• **NAKAJIMA, Tomohito**
  **Minamiashigara-shi, Kanagawa (JP)**

(74) Representative: **Becker Kurig & Partner
Patentanwälte mbB
Bavariastraße 7
80336 München (DE)**

(54) **RESIN PARTICLES AND METHOD FOR PRODUCING SAME, AQUEOUS DISPERSION, POWDER PARTICLES, RESIN COMPOSITION, AND ELECTROSTATIC CHARGE IMAGE DEVELOPING TONER**

(57) In resin particles of a styrene-(meth)acrylate-based copolymer, in a case where a glass transition temperature obtained by a Fox equation from a ratio of constituent monomers of the entire resin particles is denoted by $Tg1$ and a glass transition temperature obtained by a Fox equation from a ratio of the constituent monomers calculated from surface analysis of the resin particles is denoted by $Tg2$, all of the following expression A, expression B, and expression C are satisfied, and a tetrahydrofuran-insoluble fraction is 80% by mass or more.

$$Tg1 < 10°C \quad \text{expression A}$$

$$Tg2 > 10°C \quad \text{expression B}$$

$$0°C < Tg2 - Tg1 < 40°C \quad \text{expression C}$$

EP 4 625 053 A1

(52) Cooperative Patent Classification (CPC): (Cont.)

C-Sets
**C08F 212/08, C08F 220/1804**

**Description**

BACKGROUND OF THE INVENTION

(i) Field of the Invention

The present invention relates to resin particles and a method for producing the same, an aqueous dispersion, powder particles, a resin composition, and an electrostatic charge image developing toner.

(ii) Description of Related Art

JP2021-189408A discloses an electrostatic charge image developing toner containing toner base particles that contain at least a binder resin, in which the toner base particles are toner base particles formed by aggregation and fusion of fine particles of the binder resin and seed polymer fine particles, the seed polymer fine particles have an outer shell and a seed portion, a difference (Tg2 - Tg1) between a glass transition temperature Tg1 of the seed portion and a glass transition temperature Tg2 of the outer shell is 50°C or higher, the binder resin includes an amorphous resin having a glass transition temperature Tgm as a main component, and the Tgm is higher than the Tg1.
JP2023-047238A discloses a pressure-sensitive toner containing toner particles that contain a composite resin consisting of a styrene-based resin and a (meth)acrylic acid ester-based resin, in which a difference between a lowest glass transition temperature and a highest glass transition temperature of the composite resin is 30°C or higher, and a gel fraction of the toner particles is 1.0% by mass or more and 8.0% by mass or less.

SUMMARY OF THE INVENTION

An object of the present disclosure is to provide resin particles that can achieve both suppression of generation of aggregates over time and bend resistance, as compared with a case that, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, any of the following expression A, expression B, or expression C is not satisfied, or a case where a tetrahydrofuran-insoluble fraction is less than 80% by mass.
Specific methods for achieving the above-described object include the following aspects.

<1> According to a first aspect of the present disclosure, there are provided resin particles of a styrene-(meth)acrylate-based copolymer, in which, in a case where a glass transition temperature obtained by a Fox equation from a ratio of constituent monomers of entire resin particles is denoted by Tg1 and a glass transition temperature obtained by a Fox equation from a ratio of the constituent monomers calculated from surface analysis of the resin particles is denoted by Tg2, all of the following expression A, expression B, and expression C are satisfied, and a tetrahydrofuran-insoluble fraction is 80% by mass or more,

$$Tg1 < 10°C \qquad \text{expression A,}$$

$$Tg2 > 10°C \qquad \text{expression B,}$$

$$0°C < Tg2 - Tg1 < 40°C \quad \text{expression C.}$$

<2> According to a second aspect of the present disclosure, there are provided the resin particles according to <1>, in which a volume-average particle size may be 80 nm or more and less than 300 nm.
<3> According to a third aspect of the present disclosure, there are provided the resin particles according to <1> or <2>, in which a storage elastic modulus G' at 40°C may be $1 \times 10^5$ Pa or more and $1 \times 10^7$ Pa or less.
<4> According to a fourth aspect of the present disclosure, there is provided a method for producing resin particles of a styrene-(meth)acrylate-based copolymer, including performing polymerization by adding a plurality of emulsions containing a styrene monomer and a (meth)acrylate monomer and having different ratios of the monomers in multiple stages, in which, in a case where a glass transition temperature obtained by a Fox equation from a ratio of constituent monomers of an emulsion at a point in time when the emulsion is added with a monomer amount of 70% by mass with respect to a constituent monomer amount of entire resin particles to be obtained is denoted by Tg3 and a glass transition temperature obtained by a Fox equation from a ratio of constituent monomers of an emulsion added after the point in time is denoted by Tg4, all of the following expression D, expression E, and expression F are satisfied,

$$-45°C < Tg3 < 10°C \qquad \text{expression D,}$$

$$Tg4 > 10°C \qquad \text{expression E,}$$

$$5°C < Tg4 - Tg3 < 60°C \qquad \text{expression F.}$$

<5> According to a fifth aspect of the present disclosure, there is provided the method for producing resin particles according to <4>, in which, in the polymerization, a surfactant may be added, and an addition amount of the surfactant may be 0.5% by mass or more and less than 3.0% by mass with respect to a total mass of the resin particles to be obtained.

<6> According to a sixth aspect of the present disclosure, there is provided an aqueous dispersion containing the resin particles according to any one of <1> to <3>.

<7> According to a seventh aspect of the present disclosure, there are provided powder particles containing the resin particles according to any one of <1> to <3>.

<8> According to an eighth aspect of the present disclosure, there is provided a resin composition containing the resin particles according to any one of <1> to <3>.

<9> According to a ninth aspect of the present disclosure, there is provided an electrostatic charge image developing toner containing the resin particles according to any one of <1> to <3>.

According to <1>, there are provided resin particles that can achieve both suppression of generation of aggregates over time and bend resistance, as compared with a case in which, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, at least any one of the expression A, the expression B, or the expression C is not satisfied, or a case in which a tetrahydrofuran-insoluble fraction is less than 80% by mass.

According to <2>, there are provided resin particles having more excellent suppression property of generation of aggregates over time, as compared with a case where the volume-average particle size is less than 80 nm or 300 nm or more.

According to <3>, there are provided resin particles that can further achieve both suppression of generation of aggregates over time and bend resistance, as compared with a case where the storage elastic modulus G' at 40°C is less than $1 \times 10^5$ Pa or more than $1 \times 10^7$ Pa.

According to <4>, there is provided a method for producing resin particles that can further achieve both suppression of generation of aggregates over time and bend resistance, as compared with a case of in which, in a case where a glass transition temperature obtained by a Fox equation from a ratio of constituent monomers of an emulsion at a point in time when the emulsion is added with a monomer amount of 70% by mass with respect to a constituent monomer amount of the entire resin particles to be obtained is denoted by Tg3 and a glass transition temperature obtained by a Fox equation from a ratio of constituent monomers of an emulsion added after the point in time is denoted by Tg4, at least any one of the expression D, the expression E, or the expression F is not satisfied.

According to <5>, there is provided a method for producing resin particles having more excellent suppression property of generation of aggregates over time, as compared with a case where, in the polymerization, a surfactant is added, and an addition amount of the surfactant is less than 0.5% by mass or 3.0% by mass or more with respect to the total mass of the resin particles to be obtained.

According to <6>, <7>, <8>, or <9>, there is provided an aqueous dispersion, powder particles, a resin composition, or an electrostatic charge image developing toner, each of which uses resin particles that can achieve both suppression of generation of aggregates over time and bend resistance, as compared with a case of using resin particles in which, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, at least any one of the expression A, the expression B, or the expression C is not satisfied, or a case of resin particles in which a tetrahydrofuran-insoluble fraction is less than 80% by mass.

DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit value or lower limit value of a numerical range may be replaced with the upper limit value or lower limit value of another numerical range described in stages. Furthermore, in the present disclosure, the upper limit value or lower limit value of a numerical range may be replaced with values described in examples.

In the present disclosure, the term "step" includes not only an independent step but a step that is not clearly distinguished from other steps as long as the purpose of the step is achieved.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where there are two or more kinds of particles corresponding to each component in a composition, unless otherwise specified, the particle size of each component means a value for a mixture of two or more kinds of the particles present in the composition.

In the present disclosure, "(meth)acrylic" is an expression including both acrylic and methacrylic, and "(meth) acrylate" is an expression including both acrylate and methacrylate.

In the present disclosure, "electrostatic charge image developing toner" is also referred to as "toner".

<Resin Particles>

The resin particles according to the present exemplary embodiment are resin particles of a styrene-(meth) acrylate-based copolymer, in which, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, all of the following expression A, expression B, and expression C are satisfied, and a tetrahydrofuran-insoluble fraction is 80% by mass or more.

$$Tg1 < 10°C \qquad \text{expression A}$$

$$Tg2 > 10°C \qquad \text{expression B}$$

$$0°C < Tg2 - Tg1 < 40°C \quad \text{expression C}$$

The resin particles of styrene-(meth)acrylate-based copolymer are generally produced in a dispersion state such as emulsification polymerization, but in a case of a copolymer having a low glass transition temperature, there is a problem that the particles are likely to aggregate with each other and it is difficult to achieve with bend resistance.

In the resin particles according to the present exemplary embodiment, in a case where a glass transition temperature obtained by a Fox equation from a ratio of constituent monomers is denoted by Tg1 and a glass transition temperature obtained by a Fox equation from a ratio of the constituent monomers calculated from surface analysis of the above-described copolymer is denoted by Tg2, since all of the expressions A, B, and C are satisfied, the resin particles are resin particles of a copolymer, having a low glass transition temperature inside the resin particles, having a high glass transition temperature on the surface layer of the resin particles, and having a surface of the resin particles with an appropriate hardness, so that aggregation of the particles is suppressed.

In addition, since the tetrahydrofuran-insoluble fraction of the resin particles is 80% by mass or more, the resin particles are elastic, the aggregation is suppressed, and a copolymer having a high glass transition temperature is easily polymerized on the particle surface layer, and thus it is easy to control the structure of the resin particles.

Hereinafter, the configuration of the resin particles according to the present exemplary embodiment will be described in detail.

(Glass Transition Temperatures Tg1 and Tg2)

In the resin particles according to the present exemplary embodiment, the glass transition temperature Tg1 obtained by a Fox equation from the ratio of the constituent monomers of the entire resin particles is lower than 10°C; and from the viewpoint of achieving both the suppression of generation of aggregates over time and the bend resistance, for example, Tg1 is preferably -30°C or higher and lower than 10°C, more preferably -20°C or higher and lower than 5°C, and particularly preferably -10°C or higher and lower than 0°C.

In other words, the Tg1 satisfies the expression A, and from the viewpoint of suppression property of generation of aggregates over time, for example, the Tg1 preferably satisfies the following expression A-1, more preferably satisfies the following expression A-2, and particularly preferably satisfies the following expression A-3.

$$\text{Tg1} < 10°C \qquad \text{expression A}$$

$$-30°C \le \text{Tg1} < 10°C \qquad \text{expression A-1}$$

$$-20°C \le \text{Tg1} < 5°C \qquad \text{expression A-2}$$

$$-10°C \le \text{Tg1} < 0°C \qquad \text{expression A-3}$$

In the resin particles according to the present exemplary embodiment, the glass transition temperature Tg2 obtained by a Fox equation from the ratio of the constituent monomers calculated from surface analysis of the above-described resin particles is a temperature higher than 10°C; and from the viewpoint of achieving both the suppression of generation of aggregates over time and the bend resistance, for example, Tg2 is preferably higher than 12°C and 45°C or lower, more preferably 14°C or higher and 35°C or lower, and particularly preferably 16°C or higher and 25°C or lower.

In other words, the Tg2 satisfies the expression B, and from the viewpoint of suppression property of generation of aggregates over time, for example, the Tg2 preferably satisfies the following expression B-1, more preferably satisfies the following expression B-2, and particularly preferably satisfies the following expression B-3.

$$\text{Tg2} > 10°C \qquad \text{expression B}$$

$$12°C < \text{Tg2} \le 45°C \qquad \text{expression B-1}$$

$$14°C \le \text{Tg2} \le 35°C \qquad \text{expression B-2}$$

$$16°C \le \text{Tg2} \le 25°C \qquad \text{expression B-3}$$

In the resin particles according to the present exemplary embodiment, a value of Tg2 - Tg1 is higher than 0°C and lower than 40°C; and from the viewpoint of suppression property of generation of aggregates over time, for example, the value is preferably higher than 10°C and 38°C or lower, more preferably 15°C or higher and 34°C or lower, and particularly preferably 20°C or higher and 30°C or lower.

In other words, the value of Tg2 - Tg1 satisfies the expression C, and from the viewpoint of suppression property of generation of aggregates over time, for example, the value preferably satisfies the following expression C-1, more preferably satisfies the following expression C-2, and particularly preferably satisfies the following expression C-3.

$$0°C < \text{Tg2} - \text{Tg1} < 40°C \quad \text{expression C}$$

$$10°C < \text{Tg2} - \text{Tg1} \le 38°C \quad \text{expression C-1}$$

$$15°C \le \text{Tg2} - \text{Tg1} \le 34°C \quad \text{expression C-2}$$

$$20°C \le \text{Tg2} - \text{Tg1} \le 30°C \quad \text{expression C-3}$$

Here, it is considered that the difference between the glass transition temperatures Tg1 and Tg2 according to the Fox equation means that the styrene-based monomer and the (meth)acrylate-based monomer do not bond randomly, and an arrangement in which a large amount of a component derived from styrene is localized on the particle surface and an arrangement in which a large amount of a component derived from the (meth)acrylate-based monomer is localized inside the particles are mixed. That is, it is considered that, since the glass transition temperature of the polystyrene resin is approximately 100°C, and the glass transition temperature of the (meth)acrylic resin is usually lower than the glass transition temperature of the polystyrene resin, for example, the glass transition temperature of ethyl polyacrylate is approximately -20°C, a region having a large number of styrene-based units is unevenly distributed on the surface of the resin particles.

The ratio of constitutional monomers of the styrene-(meth)acrylate-based copolymer in the entire resin particles is quantified from NMR analysis.

The ratio of constitutional monomers of the styrene-(meth)acrylate-based copolymer on the surface of the resin particles is quantified from the following measurement.

The resin particles are dried, and surface composition analysis is performed with an X-ray photoelectron spectrometer (XPS). JPS-9000MX manufactured by JEOL Ltd. is used as the XPS measurement device, the measurement is performed using MgKα radiation as an X-ray source, at an acceleration voltage set to 10 kV, and an emission current set to 30 mA. A ratio $O(p)$ of the oxygen element to the sum of the carbon element and the oxygen element in the resin particles is obtained by the following equation.

$$O(p) = \text{number of oxygen elements}/(\text{number of carbon elements} + \text{number of oxygen elements})$$

In addition, a resin consisting of only (meth)acrylate is produced, and a ratio $O(a)$ of the oxygen element in the (meth)acrylate is obtained in the same manner.

From these measurement results, in a case where the sum of styrene and (meth)acrylate is set to 1, the surface (meth)acrylate ratio $Wa(S)$ and the surface styrene ratio $Ws(S)$ can be calculated by the following equations.

$$Wa(S) = O(p)/O(a)$$

$$Ws(S) = 1 - (O(p)/O(a))$$

Next, the glass transition temperatures Tg1 and Tg2 are calculated from the respective ratios of the constitutional monomers obtained above by the Fox equation. Specifically, the glass transition temperatures are obtained as follows.

In a case where a glass transition temperature of a homopolymer of the (meth)acrylate-based monomer is denoted by TgA (K), a ratio (mass proportion; % by mass) of the (meth)acrylate-based monomer is denoted by WA, a glass transition temperature of a homopolymer of the styrene-based monomer is denoted by TgS (K), and a ratio (mass proportion; % by mass) of the styrene-based monomer is denoted by WS, a target glass transition temperature Tg0 (K) satisfies the following Fox equation.

$$\text{Fox equation: } 1/Tg0 = (WA/TgA) + (WS/TgS)$$

By substituting the glass transition temperature and the ratio of each (meth)acrylate-based monomer and the glass transition temperature and the ratio of the styrene-based monomer in the entire resin particles or on the surface of the resin particles into the Fox equation, Tg0 = "target glass transition temperature Tg1 or Tg2" is calculated by the Fox equation. The glass transition temperature of the homopolymer of the (meth)acrylate-based monomer and the glass transition temperature of the homopolymer of the styrene-based monomer may be measured values or catalog values.

In the resin particles consisting of the styrene-(meth)acrylate-based copolymer, the adjustment of Tg1, Tg2, and the like can be achieved by adjusting polymerization conditions of the copolymer.

In particular, in order to obtain resin particles in which a composition gradient occurs in the resin particles and a region having a large number of styrene-based units is unevenly distributed on the surface, in a case of producing the resin particles by polymerization of a monomer-containing solution containing a styrene-based monomer and a (meth)acrylate-based monomer, for example, it is preferable to increase a content ratio of the styrene-based monomer to the (meth)acrylate-based monomer in the monomer-containing solution as the polymerization proceeds. The "increasing as the polymerization proceeds" typically refers to gradually increasing the content ratio of the styrene-based monomer in the monomer-containing solution, but also includes operations such as gradually increasing the content of the styrene-based monomer in an added monomer in a case of adding the added monomers to the monomer-containing solution a plurality of times, and increasing the amount of the added styrene-based monomer to gradually increase the concentration of the styrene-based monomer in the monomer-containing solution. For example, in a case of preparing the styrene-(meth)acrylate-based copolymer by an emulsification polymerization method, the content of the styrene-based monomer in the emulsion can be gradually increased in a case where the emulsion is added dropwise a plurality of times.

Furthermore, the progress of the reaction can be controlled by adjusting polymerization temperature, polymerization time, method of adding a polymerization initiator, and the like in combination.

(Tetrahydrofuran-insoluble Fraction)

In the resin particles according to the present exemplary embodiment, the tetrahydrofuran-insoluble fraction (THF-insoluble fraction) is 80% by mass or more; and from the viewpoint of achieving both the suppression of generation of aggregates over time and the bend resistance, for example, the THF-insoluble fraction is preferably 85% by mass or more, more preferably 90% by mass or more, and particularly preferably 95% by mass or more.

A method of measuring the THF-insoluble fraction in the present exemplary embodiment will be described.

(1) 0.25 g of the resin particles is weighed, 40 mL of tetrahydrofuran is added thereto, and the mixture is mixed and stirred for 3 hours.

(2) Thereafter, the mixed solution obtained in (1) is separated by a centrifuge at 2,000 revolutions per minute (rpm) for 30 minutes.

(3) 5 mL of the supernatant liquid after the centrifugation obtained in (2) is weighed, and transferred to an aluminum dish, and tetrahydrofuran is evaporated and dried in a vacuum dryer adjusted to a temperature of 50°C.

(4) From a difference in mass of the aluminum dish before and after the drying, the THF-insoluble fraction is calculated according to the following expression.

THF-insoluble fraction [%] = {0.25 - [(Mass of supernatant liquid and aluminum dish) - (Mass of aluminum dish after drying)] $\times$ 8}/0.25 $\times$ 100

(Styrene-(Meth)acrylate-based Copolymer)

The resin particles according to the present exemplary embodiment are resin particles of a styrene-(meth)acrylate-based copolymer.

Examples of the styrene-(meth)acrylate-based copolymer in the resin particles include a resin obtained by polymerizing the following styrene-based monomer and (meth)acrylate-based monomer by radical polymerization.

Examples of the styrene-based monomer include styrene, $\alpha$-methylstyrene, vinylnaphthalene; alkyl-substituted styrene with an alkyl chain, such as 2-methylstyrene, 3-methylstyrene, 4-methylstyrene, 2-ethylstyrene, 3-ethylstyrene, and 4-ethylstyrene; halogen-substituted styrene such as 2-chlorostyrene, 3-chlorostyrene, and 4-chlorostyrene; and fluorine-substituted styrene such as 4-fluorostyrene and 2,5-difluorostyrene. Among the styrene-based monomers, for example, styrene or $\alpha$-methylstyrene is preferable.

Examples of the (meth)acrylate-based monomer include methyl (meth)acrylic acid, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-decyl (meth)acrylate, n-dodecyl (meth)acrylate, n-lauryl (meth)acrylate, n-tetradecyl (meth)acrylate, n-hexadecyl (meth)acrylate, n-octadecyl (meth)acrylate, isopropyl (meth)acrylate, isobutyl (meth)acrylate, t-butyl (meth)acrylate, isopentyl (meth)acrylate, amyl (meth)acrylate, neopentyl (meth)acrylate, isohexyl (meth)acrylate, isoheptyl (meth)acrylate, isooctyl (meth)acrylate, 2-ethylhexyl (meth)acrylate, phenyl (meth)acrylate, biphenyl (meth) acrylate, diphenylethyl (meth)acrylate, t-butylphenyl (meth)acrylate, terphenyl (meth)acrylate, cyclohexyl (meth)acrylate, t-butylcyclohexyl (meth)acrylate, dimethylaminoethyl (meth)acrylate, diethylaminoethyl (meth)acrylate, methoxyethyl (meth)acrylate, 2-hydroxyethyl (meth)acrylate, and 2-carboxyethyl (meth)acrylate.

As the (meth)acrylate-based monomer, from the viewpoint of suppression property of generation of aggregates over time and ease of adjusting Tg1 and Tg2 of the styrene-(meth)acrylate-based copolymer, for example, a (meth) acrylate compound having an alkyl group having 2 to 12 carbon atoms (also referred to as "number of carbon atoms") is preferable, a (meth)acrylate compound having an alkyl group having 2 to 10 carbon atoms is more preferable, and a (meth) acrylate compound having an alkyl group having 4 to 7 carbon atoms is particularly preferable.

Among the above, as the (meth)acrylate-based monomer, from the viewpoint of suppression property of generation of aggregates over time and ease of adjusting Tg1 and Tg2 of the styrene-(meth)acrylate-based copolymer, for example, n-butyl (meth)acrylate is particularly preferable.

The styrene-(meth)acrylate-based copolymer in the resin particles according to the present exemplary embodiment preferably has, for example, a crosslinked structure.

Examples of a crosslinking agent forming the crosslinked structure include aromatic polyfunctional vinyl compounds such as divinylbenzene and divinylnaphthalene; polyvinyl esters of aromatic polyvalent carboxylic acids, such as divinyl phthalate, divinyl isophthalate, divinyl terephthalate, divinyl homophthalate, divinyl trimesate, trivinyl trimesate, divinyl naphthalenedicarboxylate, and divinyl biphenylcarboxylate; divinyl esters of nitrogen-containing aromatic compounds, such as divinyl pyridine dicarboxylate; vinyl esters of unsaturated heterocyclic carboxylic acid compounds, such as vinyl pyromucate, vinyl furan carboxylate, vinyl pyrrole-2-carboxylate, and vinyl thiophene carboxylate; (meth)acrylic acid esters of linear polyhydric alcohols, such as butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, dodecanediol diacrylate, and dodecanediol dimethacrylate; (meth)acrylic acid esters of branched substituted polyhydric alcohols, such as neopentylglycol dimethacrylate and 2-hydroxy,1,3-diacryloxypropane; and polyfunctional vinyl esters of polyvalent carboxylic acids, such as polyethylene glycol di(meth)acrylate, polypropylene polyethylene glycol di(meth)acrylates, divinyl succinate, divinyl fumarate, vinyl maleate, divinyl maleate, divinyl diglycolate, vinyl itaconate, divinyl itaconate, divinyl acetone dicarboxylate, divinyl glutarate, 3,3'-divinylthiodipropionate, divinyl trans-aconitate, trivinyl trans-aconitate, divinyl adipate, divinyl pimelate, divinyl suberate, divinyl azelate, divinyl sebacate, divinyl dodecanedioate, and divinyl brassylate.

One kind of crosslinking agent may be used alone, or two or more kinds of crosslinking agents may be used in combination.

Among the above, as the crosslinking agent, for example, it is preferable to use an alkylene glycol diacrylate having an alkylene chain having 6 or more carbon atoms. That is, for example, the resin particles preferably have a constitutional unit derived from an alkylene glycol diacrylate, and the number of carbon atoms in the alkylene chain of the alkylene glycol diacrylate is preferably 6 or more.

In a case of using resin particles having a constitutional unit derived from an alkylene glycol diacrylate and having an alkylene chain having 6 or more carbon atoms, a crosslinking density is low (that is, a distance between crosslinking points is long), and thus it is possible to suppress the excessive increase in elasticity of the resin particles.

From the viewpoint of adjusting the crosslinking density to an appropriate range, the number of carbon atoms in the alkylene chain of the alkylene glycol diacrylate is, for example, preferably 6 or more, more preferably 6 or more and 12 or less, and still more preferably 8 or more and 12 or less. More specific examples of the alkylene glycol diacrylate include 1,6-hexanediol acrylate, 1,6-hexanediol methacrylate, 1,8-octanediol diacrylate, 1,8-octanediol dimethacrylate, 1,9-nonanediol diacrylate, 1,9-nonanediol dimethacrylate, 1,10-decanediol diacrylate, 1,10-decanediol dimethacrylate, 1,12-dodecanediol diacrylate, and 1,12-dodecanediol dimethacrylate, and among these, for example, 1,10-decanediol diacrylate or 1,10-decanediol dimethacrylate is preferable.

Examples of other crosslinking agents include 2-carboxyethyl acrylate, and for example, it is preferable to use at least one of the above-described alkylene glycol diacrylate or 2-carboxyethyl acrylate.

In a case where the resin particles are polymer particles of a composition for forming resin particles containing a styrene-based monomer, a (meth)acrylate-based monomer, and a crosslinking agent, the amount of the crosslinking agent contained in the composition may be adjusted such that Tg of the resin particles is controlled.

A content of the crosslinking agent in the composition for forming resin particles with respect to the total of 100 parts by mass of the styrene-based monomer and the (meth)acrylate-based monomer is, for example, preferably 0.1 parts by mass or more and 5.0 parts by mass or less, more preferably 0.2 parts by mass or more and 3.0 parts by mass or less, and still more preferably 0.3 parts by mass or more and 2.5 parts by mass or less.

(Volume-average Particle Size)

From the viewpoint of suppression property of generation of aggregates over time, a volume-average particle size of the resin particles is, for example, preferably 50 nm or more and less than 350 nm, more preferably 80 nm or more and less than 300 nm, and still more preferably 100 nm or more and less than 250 nm.

For determining the volume-average particle size of the resin particles, a particle size distribution is measured using a laser diffraction-type particle size distribution analyzer (for example, LA-700 manufactured by HORIBA, Ltd.), a volume-based cumulative distribution from small-sized particles is drawn for the particle size range (channel) divided using the particle size distribution, and the particle size of particles accounting for cumulative 50% of all particles is measured as a volume-average particle size D50v.

(Storage Elastic Modulus)

From the viewpoint of achieving both the suppression of generation of aggregates over time and the bend resistance, a storage elastic modulus G' of the resin particles at 40°C is, for example, preferably $1 \times 10^5$ Pa or more and $1 \times 10^7$ Pa or less, more preferably $5 \times 10^5$ Pa or more and $1 \times 10^7$ Pa or less, and particularly preferably $9 \times 10^5$ Pa or more and $1 \times 10^7$ Pa or less.

The storage elastic modulus G' of the resin particles at 40°C is measured with a rheometer. Specifically, a measurement sample is produced by molding the resin particles to be measured into a tablet form at normal temperature (for example, 25°C) using a press molding machine. Next, using the measurement sample, dynamic viscoelasticity measurement is performed under the following conditions with a rheometer to obtain the storage elastic modulus G'.

-Measurement Conditions-

Measurement device: rheometer ARES (manufactured by TA Instruments)
Fixture: 8mm parallel plates
Gap: adjusted to 4 mm
Frequency: 1Hz
Measurement temperature: measured under a condition of temperature rising from 25°C to a maximum reachable temperature of 150°C
Strain: 0.03 to 20% (automatic control)
Temperature rising rate: 1 °C/min

(Method for Producing Resin Particles)

The method for producing the resin particles according to the present exemplary embodiment is not particularly limited, but for example, it is preferable to be a method for producing resin particles of a styrene-(meth)acrylate-based copolymer, including a polymerizing step of adding a plurality of emulsions containing a styrene monomer and a (meth) acrylate monomer and having different ratios of the monomers in multiple stages, in which, in a case where a glass transition temperature obtained by a Fox equation from a ratio of constituent monomers of an emulsion at a point in time when the emulsion is added with a monomer amount of 70% by mass with respect to a constituent monomer amount of the entire resin particles to be obtained is denoted by Tg3 and a glass transition temperature obtained by a Fox equation from a ratio of constituent monomers of an emulsion added after the point in time is denoted by Tg4, all of the following expression D, expression E, and expression F are satisfied.

$$-45°C < Tg3 < 10°C \qquad \text{expression D}$$

$$Tg4 > 10°C \qquad \text{expression E}$$

$$5°C < Tg4 - Tg3 < 60°C \quad \text{expression F}$$

The resin particles according to the present exemplary embodiment are, for example, preferably resin particles produced by the method for producing resin particles according to the present exemplary embodiment.
In addition, it is preferable that, in the above-described polymerizing step, a surfactant is added, and an addition amount of the surfactant is, for example, 0.5% by mass or more and less than 3.0% by mass with respect to the total mass of the resin particles to be obtained.

-Glass Transition Temperatures Tg3 and Tg4-

In the method for producing resin particles according to the present exemplary embodiment, the glass transition temperature Tg3 obtained by a Fox equation from the ratio of constituent monomers of an emulsion at a point in time when the emulsion is added with a monomer amount of 70% by mass with respect to a constituent monomer amount of the entire resin particles to be obtained is higher than -45°C and lower than 10°C; and from the viewpoint of achieving both the suppression of generation of aggregates over time and the bend resistance, for example, Tg3 is preferably -40°C or higher and lower than 5°C, more preferably -35°C or higher and lower than 0°C, and particularly preferably -25°C or higher and -5°C or lower.
In other words, the Tg3 satisfies the expression D, and from the viewpoint of suppression property of generation of aggregates over time, for example, the Tg3 preferably satisfies the following expression D-1, more preferably satisfies the following expression D-2, and particularly preferably satisfies the following expression D-3.

$$-45°C < Tg3 < 10°C \qquad \text{expression D}$$

$$-40°C \leq Tg3 < 5°C \qquad \text{expression D-1}$$

$$-35°C \leq Tg3 < 0°C \qquad \text{expression D-2}$$

$$-25°C \leq Tg3 \leq -5°C \qquad \text{expression D-3}$$

In the method for producing resin particles according to the present exemplary embodiment, the glass transition temperature Tg4 obtained by a Fox equation from a ratio of constituent monomers of an emulsion added after the point in time when the emulsion is added with a monomer amount of 70% by mass with respect to a constituent monomer amount of the entire resin particles to be obtained is a temperature higher than 10°C; and from the viewpoint of achieving both the suppression of generation of aggregates over time and the bend resistance, for example, Tg4 is preferably higher than 12°C and 45°C or lower, more preferably 14°C or higher and 35°C or lower, and particularly preferably 16°C or higher and 25°C or lower.

In other words, the Tg4 satisfies the expression E, and from the viewpoint of suppression property of generation of aggregates over time, for example, the Tg4 preferably satisfies the following expression E-1, more preferably satisfies the following expression E-2, and particularly preferably satisfies the following expression E-3.

$$Tg4 > 10°C \qquad \text{expression E}$$

$$12°C < Tg4 \leq 45°C \qquad \text{expression E-1}$$

$$14°C \leq Tg4 \leq 35°C \qquad \text{expression E-2}$$

$$16°C \leq Tg4 \leq 25°C \qquad \text{expression E-3}$$

In the resin particles according to the present exemplary embodiment, a value of Tg4 - Tg3 is higher than 5°C and lower than 60°C; and from the viewpoint of achieving both the suppression of generation of aggregates over time and the bend resistance, for example, the value is preferably higher than 20°C and 48°C or lower, more preferably 25°C or higher and 44°C or lower, and particularly preferably 30°C or higher and 40°C or lower.

In other words, the value of Tg4 - Tg3 satisfies the expression F, and from the viewpoint of suppression property of generation of aggregates over time, for example, the value preferably satisfies the following expression F-1, more preferably satisfies the following expression F-2, and particularly preferably satisfies the following expression F-3.

$$5°C < Tg4 - Tg3 < 60°C \quad \text{expression F}$$

$$20°C < Tg4 - Tg3 \leq 48°C \quad \text{expression F-1}$$

$$25°C \leq Tg4 - Tg3 \leq 44°C \quad \text{expression F-2}$$

$$30°C \leq Tg4 - Tg3 \leq 40°C \quad \text{expression F-3}$$

-Polymerizing Step-

The method for producing resin particles according to the present exemplary embodiment is not particularly limited, but is a method for producing resin particles of a styrene-(meth)acrylate-based copolymer, including a polymerizing step of adding emulsions containing a styrene monomer and a (meth)acrylate monomer in multiple stages.

For example, it is preferable that the above-described emulsion contains the styrene-based monomer and the (meth)acrylate-based monomer as monomers, and further contains a crosslinking agent.

Hereinafter, an example of the above-described polymerizing step will be described in more detail.

For example, it is preferable that the above-described polymerizing step includes

a step (emulsion preparation step) of obtaining an emulsion containing a monomer, a crosslinking agent, a surfactant, and water;

a step (first emulsification polymerization step) of adding a polymerization initiator to the emulsion and then heating to polymerize the monomer; and

a step (second emulsification polymerization step) of adding an emulsion containing a monomer and a crosslinking agent to the reaction solution after the first emulsification polymerization step, and then heating to polymerize the monomers.

Furthermore, in the second emulsification polymerization step, in order to adjust the formulation of the surface of the particles, after adjusting the emulsion by changing the ratio of the styrene-based monomer and the (meth)acrylate-based monomer, the emulsion may be added a plurality of times.

--Emulsion Preparation Step--

The emulsion preparation step is a step of obtaining an emulsion containing a monomer, a crosslinking agent, a surfactant, and water.

For example, it is preferable to obtain the emulsion by emulsifying a monomer, a crosslinking agent, a surfactant, and water by using an emulsifying machine.

Examples of the emulsifying machine include a rotary stirrer equipped with a propeller type, anchor type, paddle type, or turbine type stirring blade; a stationary mixer such as a static mixer; a rotor and stator type emulsifying machine such as a homogenizer and Clare mix; a mill type emulsifying machine having grinding function; a high-pressure emulsifying machine such as a Manton-Gaulin-type pressure emulsifying machine; a high-pressure nozzle type emulsifying machine that causes cavitation under high pressure; a high-pressure impact-type emulsifying machine, such as a microfluidizer, that generates shearing force by causing collision of liquids under high pressure; an ultrasonic emulsifying machine that causes cavitation by using ultrasonic waves; and a membrane emulsifying machine that performs emulsification through pores.

The stirring speed and time during the emulsification are not particularly limited as long as the emulsification is performed, and it is preferable to appropriately select the stirring speed and time according to the predetermined particle size and the like.

The heating temperature may be appropriately selected according to the predetermined particle size and the like, but for example, the heating temperature is preferably 35°C or higher and 85°C or lower.

As the monomers, for example, it is preferable to use a styrene-based monomer and a (meth)acrylate-based monomer.

As the crosslinking agent, the aforementioned crosslinking agent is used.

Examples of the surfactant include an anionic surfactant based on a sulfuric acid ester salt, a sulfonate, a phosphoric acid ester, soap, and the like; a cationic surfactant such as an amine salt-type cationic surfactant and a quaternary ammonium salt-type cationic surfactant; a nonionic surfactant based on polyethylene glycol, an alkylphenol ethylene oxide adduct, and a polyhydric alcohol, and the like. The nonionic surfactant may be used in combination with an anionic surfactant or a cationic surfactant. Among these surfactants, for example, an anionic surfactant is preferable. One kind of surfactant may be used alone, or two or more kinds of surfactants may be used in combination.

The emulsion may contain a chain transfer agent.

The chain transfer agent is not particularly limited. As the chain transfer agent, a compound having a thiol component can be used. Specifically, for example, alkyl mercaptans such as hexyl mercaptan, heptyl mercaptan, octyl mercaptan, nonyl mercaptan, decyl mercaptan, and dodecyl mercaptan are preferable.

A mass ratio of the styrene-based monomer to the (meth)acrylate-based monomer in the emulsion (styrene-based monomer/(meth)acrylate-based monomer) is, for example, preferably 0.2 or more and 1.1 or less.

In addition, the content of the crosslinking agent with respect to the entire emulsion is, for example, preferably 0.5% by mass or more and 3% by mass or less.

--First Emulsification Polymerization Step--

The first emulsion polymerization step is a step of adding a polymerization initiator to the emulsion and heating the emulsion to polymerize the monomers.

Here, in the polymerization, for example, it is preferable to stir the emulsion (reaction solution) containing the polymerization initiator with a stirrer.

Examples of the stirrer include a rotary stirrer equipped with a propeller type, anchor type, paddle type, or turbine type stirring blade.

The stirring speed and time are not particularly limited as long as the thermoplastic resin is dissolved in the solvent or dispersed in the solvent, and it is preferable to appropriately select the stirring speed and time.

As the polymerization initiator, for example, it is preferable to use ammonium persulfate.

The concentration of the monomers in the emulsion is, for example, preferably 40% by mass or more and 70% by mass or less.

The heating temperature during the polymerization may be appropriately selected according to the polymerization initiator and the like, but for example, the heating temperature is preferably 60°C or higher and 85°C or lower.

--Second Emulsification Polymerization Step--

The second emulsification polymerization step is a step of adding an emulsion containing a monomer to the reaction solution obtained after the first emulsification polymerization step, and heating to polymerize the monomer.

In the polymerization, for example, it is preferable to stir the reaction solution in the same manner as in the first emulsification polymerization step.

In the present step, the ratio of the styrene-based monomer and the (meth)acrylate-based monomer in the emulsion containing the monomers may be changed, and the emulsion may be added by dividing the emulsion into a plurality of times.

For example, it is preferable to obtain the emulsion containing monomers by emulsifying monomers, a surfactant, and water by using an emulsifying machine.

In the emulsion used in the second emulsification polymerization step, the proportion of the styrene-based monomer to all monomers in the emulsion is, for example, preferably higher than the proportion of the emulsion used in the first emulsification polymerization step, and the proportion of the styrene-based monomer to all monomers in the emulsion added in the second emulsification polymerization step is, for example, preferably 55% by mass or more and 70% by mass or less.

The point in time when the emulsion is added with a monomer amount of 70% by mass with respect to a constituent monomer amount of the entire resin particles to be obtained may be the first emulsification polymerization step or the second emulsification polymerization step. For example, the amount of the monomer to be added in the first emulsification polymerization step is preferably 55% by mass or more and 85% by mass or less, more preferably 65% by mass or more and 75% by mass or less, and particularly preferably 70% by mass with respect to the constituent monomer amount of the entire resin particles.

The method for producing resin particles according to the present exemplary embodiment may include known steps such as a step of isolating the resin particles, a step of washing the resin particles, and a step of drying the resin particles.

A known method is used as the isolation method, the washing method, the drying method, and the like.

The washing method is not particularly limited, but in view of charging properties, displacement washing may be thoroughly performed using deionized water. In addition, the isolation method, for example, a solid-liquid separation method is not particularly limited, but in view of productivity, suction filtration, pressure filtration, or the like may be performed. Furthermore, the drying method is not particularly limited, but in view of productivity, freeze drying, flush drying, fluidized drying, vibratory fluidized drying, or the like may be performed.

As the method for producing resin particles according to the present exemplary embodiment, a polymerization granulation method described in JP1993-43608A (JP-H5-43608A), JP1993-222267A (JP-H5-222267A), JP1995-18003A (JP-H7-18003A), and the like may be referred to.

In addition, as the method for producing resin particles according to the present exemplary embodiment, a method described in "Ultrafine Particles and Materials", edited by the Japan Society of Materials Science, published by Shokabo Publishing Co., Ltd., 1993; "Production and Application of Fine Particles and Powders", supervised by Haruma Kawaguchi, published by CMC Publishing Co., Ltd., 2005; and the like may be referred to.

(Use of Resin Particles)

The use of the resin particles according to the present exemplary embodiment is not particularly limited, but for example, the resin particles are suitably used as resin particles for forming an image and more suitably used in an electrostatic charge image developing toner. Among these, for example, the resin particles according to the present exemplary embodiment are particularly suitably used as an internal additive for the electrostatic charge image developing toner.

In addition, for example, the resin particles according to the present exemplary embodiment are also suitably used as powder coating materials and resin particles for toner displays.

In addition, examples thereof also include applications to a cosmetic base material, a rolling agent, an abrasive, a scrub agent, a display spacer, a material for bead molding, light diffusing particles, a resin reinforcing agent, a refractive index control agent, toner particles, and anti-blocking particles.

Furthermore, for example, the resin particles according to the present exemplary embodiment are suitably used in a form of an aqueous dispersion, powder particles, a resin composition, or the like because the resin particles have excellent suppression property of generation of aggregates over time.

-Aqueous Dispersion-

The aqueous dispersion according to the present exemplary embodiment is an aqueous dispersion containing the resin particles according to the present exemplary embodiment.

The aqueous dispersion may contain known components such as a surfactant and a water-soluble solvent, in addition to the resin particles according to the present exemplary embodiment and water. From the viewpoint of suppression of generation of aggregates and emulsification polymerization properties, a concentration of solid contents of the aqueous dispersion is, for example, preferably 20% by mass or more and 45% by mass or less.

-Powder Particles-

The powder particles according to the present exemplary embodiment are powder particles containing the resin particles according to the present exemplary embodiment.

The powder particles may contain known components such as a colorant, a magnetic material, an antistatic agent, a filler, and an external additive.

-Resin Composition-

The resin composition according to the present exemplary embodiment is a resin composition containing the resin particles according to the present exemplary embodiment.

For example, the resin composition preferably contains a binder, and more preferably contains a binder polymer.

As the binder, a known binder is used.

In addition, the resin composition may contain known components such as a colorant and a filler, depending on the use of the resin composition.

--Electrostatic Charge Image Developing Toner--

The electrostatic charge image developing toner according to the present exemplary embodiment is an electrostatic charge image developing toner containing the resin particles according to the present exemplary embodiment.

For example, it is preferable that the electrostatic charge image developing toner according to the present exemplary embodiment contains the resin particles according to the present exemplary embodiment as an internal additive of toner particles (also referred to as "toner base particles").

For example, the electrostatic charge image developing toner according to the present exemplary embodiment preferably has toner particles and an external additive.

In addition, the electrostatic charge image developing toner according to the present exemplary embodiment is used for a one-component or two-component electrostatic charge image developer, and the electrostatic charge image developer is used for an image forming apparatus or an image forming method.

A content of the resin particles is, for example, preferably 2% by mass or more and 20% by mass or less, and more preferably 5% by mass or more and 15% by mass or less with respect to the entire toner particles.

In a case where the content of the resin particles is within the above-described range, it is easy to control a loss tangent tan $\delta$ of the toner particles at each temperature within the above-described range. As a result, gloss level difference is easily suppressed. In addition, the low-temperature fixability is improved.

~Binder Resin~

Examples of the binder resin include vinyl-based resins consisting of a homopolymer of a monomer, such as styrenes (for example, styrene, p-chlorostyrene, $\alpha$-methylstyrene, and the like), (meth)acrylic acid esters (for example, methyl acrylate, ethyl acrylate, n-propyl acrylate, n-butyl acrylate, lauryl acrylate, 2-ethylhexyl acrylate, methyl methacrylate, ethyl methacrylate, n-propyl methacrylate, lauryl methacrylate, 2-ethylhexyl methacrylate, and the like), ethylenically unsaturated nitriles (for example, acrylonitrile, methacrylonitrile, and the like), vinyl ethers (for example, vinyl methyl ether, vinyl isobutyl ether, and the like), vinyl ketones (for example, vinyl methyl ketone, vinyl ethyl ketone, vinyl isopropenyl ketone, and the like), olefins (for example, ethylene, propylene, butadiene, and the like), or a copolymer obtained by combining two or more kinds of monomers described above.

Examples of the binder resin include non-vinyl-based resins such as an epoxy resin, a polyester resin, a polyurethane resin, a polyamide resin, a cellulose resin, a polyether resin, and modified rosin, mixtures of these with the vinyl-based resins, or graft polymers obtained by polymerizing a vinyl-based monomer together with the above resins.

One kind of each of these binder resins may be used alone, or two or more kinds of these binder resins may be used in combination.

As the binder resin, for example, a polyester resin is suitable.

Examples of the polyester resin include known polyester resins.

Examples of the polyester resin include a polycondensate of a polyvalent carboxylic acid and a polyhydric alcohol. As the polyester resin, a commercially available product or a synthetic resin may be used.

Examples of the polyvalent carboxylic acid include aliphatic dicarboxylic acids (for example, oxalic acid, malonic acid, maleic acid, fumaric acid, citraconic acid, itaconic acid, glutaconic acid, succinic acid, alkenyl succinic acid, adipic acid, sebacic acid, and the like), alicyclic dicarboxylic acid (for example, cyclohexanedicarboxylic acid and the like), aromatic dicarboxylic acids (for example, terephthalic acid, isophthalic acid, phthalic acid, naphthalenedicarboxylic acid, and the like), anhydrides of these, and lower alkyl esters (for example, having 1 or more and 5 or less carbon atoms). Among the above, for example, aromatic dicarboxylic acids are preferable as the polyvalent carboxylic acid.

As the polyvalent carboxylic acid, a carboxylic acid having a valency of 3 or more that has a crosslinked structure or a branched structure may be used in combination with a dicarboxylic acid. Examples of the carboxylic acid having a valency of 3 or more include trimellitic acid, pyromellitic acid, anhydrides of these acids, and lower alkyl esters (for example, having 1 or more and 5 or less carbon atoms) of these acids.

One kind of polyvalent carboxylic acid may be used alone, or two or more kinds of polyvalent carboxylic acids may be used in combination.

Examples of the polyhydric alcohol include aliphatic diols (for example, ethylene glycol, diethylene glycol, triethylene glycol, propylene glycol, butanediol, hexanediol, neopentyl glycol, and the like), alicyclic diols (for example, cyclohexanediol, cyclohexanedimethanol, hydrogenated bisphenol A, and the like), and aromatic diols (for example, an ethylene oxide adduct of bisphenol A, a propylene oxide adduct of bisphenol A, and the like).

Among the polyhydric alcohols, for example, an aromatic diol or an alicyclic diol is preferable, and an aromatic diol is more preferable.

As the polyhydric alcohol, a polyhydric alcohol having three or more hydroxyl groups and a crosslinked structure or a branched structure may be used in combination with a diol. Examples of the polyhydric alcohol having three or more hydroxyl groups include glycerin, trimethylolpropane, and pentaerythritol.

One kind of polyhydric alcohol may be used alone, or two or more kinds of polyhydric alcohols may be used in combination.

A glass transition temperature (Tg) of the polyester resin is, for example, preferably 50°C or higher and 80°C or lower, and more preferably 50°C or higher and 65°C or lower.

The glass transition temperature is determined from a DSC curve obtained by differential scanning calorimetry (DSC). More specifically, the glass transition temperature is determined by "extrapolated glass transition onset temperature" described in the method for determining a glass transition temperature in JIS K 7121-1987, "Testing methods for transition temperatures of plastics".

A weight-average molecular weight (Mw) of the polyester resin is, for example, preferably 5,000 or more and 1,000,000 or less, and more preferably 7,000 or more and 500,000 or less.

A number-average molecular weight (Mn) of the polyester resin is, for example, preferably 2,000 or more and 100,000 or less.

A molecular weight distribution Mw/Mn of the polyester resin is, for example, preferably 1.5 or more and 100 or less, and more preferably 2 or more and 60 or less.

The weight-average molecular weight and the number-average molecular weight are measured by gel permeation chromatography (GPC). By GPC, the molecular weight is measured using GPC·HLC-8120GPC manufactured by Tosoh Corporation as a measurement device, TSKgel Super HM-M (15 cm) manufactured by Tosoh Corporation as a column, and THF as a solvent.

The weight-average molecular weight and the number-average molecular weight are calculated using a molecular weight calibration curve plotted using a monodisperse polystyrene standard sample from the measurement results.

The polyester resin is obtained by a known producing method. Specifically, for example, the polyester resin is obtained by a method of setting a polymerization temperature to 180°C or higher and 230°C or lower, reducing the internal pressure of a reaction system as necessary, and carrying out a reaction while removing water or an alcohol generated during condensation.

In a case where monomers as raw materials are not dissolved or compatible at the reaction temperature, in order to dissolve the monomers, a solvent having a high boiling point may be added as a solubilizer. In this case, a polycondensation reaction is carried out in a state where the solubilizer is distilled off. In a case where a monomer with poor compatibility takes part in the reaction, for example, the monomer with poor compatibility may be condensed in advance with an acid or an alcohol that is to be polycondensed with the monomer, and then polycondensed together with the main component.

The content of the binder resin with respect to the total amount of the toner particles is, for example, preferably 40% by mass or more and 95% by mass or less, more preferably 50% by mass or more and 90% by mass or less, and even more preferably 60% by mass or more and 85% by mass or less.

~Colorant~

Examples of the colorant include various pigments such as carbon black, chrome yellow, Hansa yellow, benzidine yellow, threne yellow, quinoline yellow, pigment yellow, permanent orange GTR, pyrazolone orange, vulcan orange, watch young red, permanent red, brilliant carmine 3B, brilliant carmine 6B, Dupont oil red, pyrazolone red, lithol red, rhodamine B lake, lake red C, pigment red, rose bengal, aniline blue, ultramarine blue, calco oil blue, methylene blue chloride, phthalocyanine blue, pigment blue, phthalocyanine green, and malachite green oxalate; and various dyes such as an acridine-based dye, a xanthene-based dye, an azo-based dye, a benzoquinone-based dye, an azine-based dye, an anthraquinone-based dye, a thioindigo-based dye, a dioxazine-based dye, a thiazine-based dye, an azomethine-based dye, an indigo-based dye, a phthalocyanine-based dye, an aniline black-based dye, a polymethine-based dye, a triphenylmethane-based dye, a diphenylmethane-based dye, and a thiazole-based dye.

One kind of colorant may be used alone, or two or more kinds of colorants may be used in combination.

As the colorant, a colorant having undergone a surface treatment as necessary may be used, or a dispersant may be used in combination with the colorant. Furthermore, a plurality of kinds of colorants may be used in combination.

The content of the colorant with respect to the total amount of the toner particles is, for example, preferably 1% by mass or more and 30% by mass or less, and more preferably 3% by mass or more and 15% by mass or less.

~Release Agent~

Examples of the release agent include hydrocarbon-based wax; natural wax such as carnauba wax, rice wax, and candelilla wax; synthetic or mineral·petroleum-based wax such as montan wax; and ester-based wax such as fatty acid esters and montanic acid esters. The release agent is not limited to the agents.

The melting temperature of the release agent is, for example, preferably 50°C or higher and 110°C or lower, and more preferably 60°C or higher and 100°C or lower.

The melting temperature is determined from a DSC curve obtained by differential scanning calorimetry (DSC) by "peak melting temperature" described in the method for determining the melting temperature in JIS K7121-1987, "Testing methods for transition temperatures of plastics".

The content of the release agent with respect to the total amount of the toner particles is, for example, preferably 1% by mass or more and 20% by mass or less, and more preferably 5% by mass or more and 15% by mass or less.

~Other Additives~

Examples of other additives include known additives such as a magnetic material, an antistatic agent, and inorganic powder. The additives are incorporated into the toner particles as internal additives.

-Characteristics and the like of Toner Particles-

The toner particles may be toner particles that have a single-layer structure or toner particles having a so-called core/shell structure that is configured with a core portion (core particle) and a coating layer (shell layer) coating the core portion.

The toner particles having a core/shell structure may, for example, be configured with a core portion that is configured with a binder resin and other additives used as necessary, such as a colorant and a release agent, and a coating layer that is configured with a binder resin.

The volume-average particle size (D50v) of the toner particles is, for example, preferably 2 $\mu$m or more and 10 $\mu$m or less, and more preferably 4 $\mu$m or more and 8 $\mu$m or less.

The various average particle sizes and various particle size distribution indexes of the toner particles are measured using COULTER MULTISIZER II (manufactured by Beckman Coulter, Inc.) and using ISOTON-II (manufactured by Beckman Coulter, Inc.) as an electrolytic solution.

For measurement, a measurement sample in an amount of 0.5 mg or more and 50 mg or less is added to 2 ml of a 5% by mass aqueous solution of a surfactant (for example, preferably sodium alkylbenzene sulfonate) as a dispersant. The obtained solution is added to an electrolytic solution in a volume of 100 ml or more and 150 ml or less.

The electrolytic solution in which the sample is suspended is subjected to a dispersion treatment for 1 minute with an ultrasonic disperser, and the particle size distribution of particles having a particle size in a range of 2 $\mu$m or more and 60 $\mu$m or less is measured using COULTER MULTISIZER II with an aperture having an aperture size of 100 $\mu$m. The number of particles to be sampled is 50,000.

For the particle size range (channel) divided based on the measured particle size distribution, a cumulative volume distribution and a cumulative number distribution are plotted from small-sized particles. The particle size at which the cumulative percentage of particles is 16% is defined as volume-based particle size D16v and a number-based particle size D16p. The particle size at which the cumulative percentage of particles is 50% is defined as volume-average particle size D50v and a cumulative number-average particle size D50p. The particle size at which the cumulative percentage of particles is 84% is defined as volume-based particle size D84v and a number-based particle size D84p.

By using these, a volume-average particle size distribution index (GSDv) is calculated as $(D84v/D16v)^{1/2}$, and a number-average particle size distribution index (GSDp) is calculated as $(D84p/D16p)^{1/2}$.

The average circularity of the toner particles is, for example, preferably 0.94 or more and 1.00 or less, and more preferably 0.95 or more and 0.98 or less.

The average circularity of the toner particles is determined by (equivalent circular perimeter length)/(perimeter length) [(perimeter length of circle having the same projected area as particle image)/(perimeter length of particle projection image)]. Specifically, the average circularity is a value measured by the following method.

First, toner particles as a measurement target are collected by suction, and a flat flow of the particles is formed. Thereafter, an instant flash of strobe light is emitted to the particles, and the particles are imaged as a still image. By using a flow-type particle image analyzer (FPIA-3000 manufactured by Sysmex Corporation) performing image analysis on the particle image, the average circularity is determined. The number of samplings for determining the average circularity is 3,500.

In a case where a toner contains external additives, the toner (developer) as a measurement target is dispersed in water containing a surfactant, then the dispersion is treated with ultrasonic waves such that the external additives are removed, and the toner particles are obtained.

~External Additive~

Examples of the external additive include inorganic particles. Examples of the inorganic particles include $SiO_2$, $TiO_2$, $Al_2O_3$, $CuO$, $ZnO$, $SnO_2$, $CeO_2$, $Fe_2O_3$, $MgO$, $BaO$, $CaO$, $K_2O$, $Na_2O$, $ZrO_2$, $CaO \cdot SiO_2$, $K_2O \cdot (TiO_2)_n$, $Al_2O_3 \cdot 2SiO_2$, $CaCO_3$, $MgCO_3$, $BaSO_4$, and $MgSO_4$.

The surface of the inorganic particles as an external additive may have undergone, for example, a hydrophobic treatment. The hydrophobic treatment is performed, for example, by dipping the inorganic particles in a hydrophobic agent. The hydrophobic agent is not particularly limited, and examples thereof include a silane-based coupling agent, silicone oil, a titanate-based coupling agent, and an aluminum-based coupling agent. One kind of each of the agents may be used alone, or two or more kinds of the agents may be used in combination.

Usually, the amount of the hydrophobic agent is, for example, 1 part by mass or more and 10 parts by mass or less with respect to 100 parts by mass of the inorganic particles.

Examples of the external additive also include resin particles (resin particles such as polystyrene, polymethyl methacrylate, and melamine resins), a cleaning activator (for example, and a metal salt of a higher fatty acid represented by zinc stearate or fluorine-based polymer particles).

The amount of the external additive externally added with respect to the toner particles is, for example, preferably 0.01% by mass or more and 5% by mass or less, and more preferably 0.01% by mass or more and 2.0% by mass or less.

For example, it is preferable that the solid image formed on coated paper by using the electrostatic charge image developing toner according to the present exemplary embodiment has a reflectance of 70% or more at the reflection peak in a spectral reflection spectrum.

~Manufacturing Method of Electrostatic Charge Image Developing Toner~

The electrostatic charge image developing toner according to the present exemplary embodiment is obtained by producing toner particles and then adding the external additive to the exterior of the toner particles.

The toner particles may be manufactured by any of a dry manufacturing method (for example, a kneading and pulverizing method or the like) or a wet manufacturing method (for example, an aggregation and coalescence method, a suspension polymerization method, a dissolution suspension method, or the like). These manufacturing methods are not particularly limited, and known manufacturing methods are adopted. Among the above methods, for example, the aggregation and coalescence method may be used for obtaining toner particles.

Examples

Hereinafter, exemplary embodiments of the invention will be specifically described based on examples. However, the exemplary embodiments of the invention are not limited to the examples.

In the following description, unless otherwise specified, "parts" and "%" are based on mass.

Unless otherwise specified, the synthesis, treatment, manufacturing, and the like are carried out at room temperature (25°C ± 3°C).

<Example 1>

(Preparation of Emulsion (1-1))

· Styrene: 28 parts
· n-Butyl acrylate: 42 parts
· 1,10-Decanediol diacrylate: 0.7 parts
· Anionic surfactant (ELEMINOL MON-2, manufactured by Sanyo Chemical Industries, Ltd.): 0.8 parts
· Deionized water: 60 parts

The above-described materials are added to a mixing vessel equipped with a stirrer, and stirred to prepare an emulsion (1-1).

(Preparation of Emulsion (1-2))

· Styrene: 18.6 parts
· n-Butyl acrylate: 11.4 parts
· 1,10-Decanediol diacrylate: 0.3 parts
· Anionic surfactant (ELEMINOL MON-2, manufactured by Sanyo Chemical Industries, Ltd.): 0.4 parts
· Deionized water: 26 parts

The above-described materials are added to a mixing vessel equipped with a stirrer, and stirred to prepare an emulsion (1-2).

(Production of Styrene-(Meth)acrylate Copolymer Particle Dispersion (1))

0.3 parts of the anionic surfactant (ELEMINOL MON-2, manufactured by Sanyo Chemical Industries, Ltd.) and 100 parts of deionized water are added to a reaction vessel equipped with a stirrer and a nitrogen introduction tube, after replacing the inside of the reaction vessel with nitrogen. The reaction solution is heated in an oil bath while being stirred so that the temperature of the reaction solution is set to 75°C.

After adding 3 parts of the emulsion (1-1) thereto, 20 parts of an ammonium persulfate aqueous solution in which a concentration is adjusted to 10% by mass is further added thereto, and the reaction solution is retained for 30 minutes.

Thereafter, in a state in which the temperature of the reaction solution is maintained at 75°C, the emulsion (1-1) is gradually added dropwise to the reaction vessel over 150 minutes by a pump. At the point in time, an emulsion in which the amount of monomer is 70% by mass with respect to the constituent monomer amount of the entire resin particles to be obtained is added. After being held for 30 minutes, the emulsion (1-2) is added dropwise thereto over 90 minutes.

After completion of the dropwise addition, the solution is retained for 60 minutes, 2 parts of ammonium persulfate having a concentration of 10% by mass is added thereto, and the mixture is retained for another 3 hours and then cooled to room temperature. The obtained dispersion of resin particles is sieved through a sieve with a 70 μm mesh to remove aggregates generated in the polymerization step, and deionized water is added thereto so that the concentration of solid contents is 30%, thereby obtaining a styrene-(meth)acrylate copolymer particle dispersion (1). A volume-average particle size of the resin particles is 165 nm.

<Example 2>

A styrene-(meth)acrylate copolymer particle dispersion is produced in the same manner as in Example 1, except that, in the preparation of the emulsion (1-1), the amount of styrene is changed to 37.5 parts and the amount of n-butyl acrylate is changed to 32.6 parts, and in the preparation of the emulsion (1-2), the amount of styrene is changed to 17.6 parts and the amount of n-butyl acrylate is changed to 12.5 parts.

<Example 3>

A styrene-(meth)acrylate copolymer particle dispersion is produced in the same manner as in Example 1, except that, in the preparation of the emulsion (1-1), the amount of styrene is changed to 9.1 parts and the amount of n-butyl acrylate is changed to 60.9 parts, and in the preparation of the emulsion (1-2), the amount of styrene is changed to 16.7 parts and the amount of n-butyl acrylate is changed to 13.4 parts.

<Example 4>

A styrene-(meth)acrylate copolymer particle dispersion is produced in the same manner as in Example 1, except that, in the preparation of the emulsion (1-1), the amount of styrene is changed to 32.2 parts and the amount of n-butyl acrylate is changed to 37.8 parts, and in the preparation of the emulsion (1-2), the amount of styrene is changed to 22.5 parts and the amount of n-butyl acrylate is changed to 7.5 parts.

<Example 5>

A styrene-(meth)acrylate copolymer particle dispersion is produced in the same manner as in Example 1, except that the amount of 1,10-decanediol diacrylate is changed to 0.35 parts in the preparation of the emulsion (1-1), and the amount of 1,10-decanediol diacrylate is changed to 0.15 parts in the preparation of the emulsion (1-2).

<Example 6>

A styrene-(meth)acrylate copolymer particle dispersion is produced in the same manner as in Example 1, except that the 1,10-decanediol diacrylate in the preparation of the emulsion (1-1) and in the preparation of the emulsion (1-2) is changed to 1,6-hexanediol methacrylate.

<Example 7>

A styrene-(meth)acrylate copolymer particle dispersion is produced in the same manner as in Example 1, except that the amount of the anionic surfactant is changed to 0.07 parts in the preparation of the emulsion (1-1), and the amount of the anionic surfactant is changed to 0.03 parts in the preparation of the emulsion (1-2).

<Example 8>

A styrene-(meth)acrylate copolymer particle dispersion is produced in the same manner as in Example 1, except that, in the preparation of the emulsion (1-1) and the emulsion (1-2), the anionic surfactant in the production of the styrene-(meth)acrylate copolymer particle dispersion (1) is changed to a nonionic surfactant (EMULGEN 430, manufactured by Kao Corporation).

<Example 9>

A styrene-(meth)acrylate copolymer particle dispersion is produced in the same manner as in Example 1, except that the amount of the anionic surfactant is changed to 0.07 parts in the preparation of the emulsion (1-1), the amount of the anionic surfactant is changed to 0.03 parts in the preparation of the emulsion (1-2), and the amount of the anionic surfactant is changed to 1.3 parts in the production of the styrene-(meth)acrylate copolymer particle dispersion (1).

<Example 10>

A styrene-(meth)acrylate copolymer particle dispersion is produced in the same manner as in Example 1, except that the amount of the anionic surfactant is changed to 1.0 part in the preparation of the emulsion (1-1), the amount of the anionic surfactant is changed to 0.45 parts in the preparation of the emulsion (1-2), and the amount of the anionic surfactant is changed to 0.05 parts in the production of the styrene-(meth)acrylate copolymer particle dispersion (1).

<Example 11>

A styrene-(meth)acrylate copolymer particle dispersion is produced in the same manner as in Example 1, except that, in the preparation of the emulsion (1-1), the amount of styrene is changed to 7.0 parts and the n-butyl acrylate is changed to 63.0 parts of ethyl acrylate, and in the preparation of the emulsion (1-2), the amount of styrene is changed to 12.9 parts and the n-butyl acrylate is changed to 17.1 parts of ethyl acrylate.

<Example 12>

A styrene-(meth)acrylate copolymer particle dispersion is produced in the same manner as in Example 1, except that, in the preparation of the emulsion (1-1), the amount of styrene is changed to 34.3 parts and the n-butyl acrylate is changed to 35.7 parts of 2-ethylhexyl acrylate, and in the preparation of the emulsion (1-2), the amount of styrene is changed to 20.4 parts and the n-butyl acrylate is changed to 9.6 parts of 2-ethylhexyl acrylate.

<Comparative Example 1>

(Production of Emulsion (C1))

· Styrene: 46.6 parts
· n-Butyl acrylate: 53.4 parts
· 1,10-Decanediol diacrylate: 1.0 part
· Anionic surfactant (ELEMINOL MON-2, manufactured by Sanyo Chemical Industries, Ltd.): 1.2 parts
· Deionized water: 86 parts

The above-described materials are added to a mixing vessel equipped with a stirrer, and stirred to prepare an emulsion (C1).

(Production of Styrene-(Meth)acrylate Copolymer Particle Dispersion (C1))

0.3 parts of the anionic surfactant (ELEMINOL MON-2, manufactured by Sanyo Chemical Industries, Ltd.) and 100 parts of deionized water are added to a reaction vessel equipped with a stirrer and a nitrogen introduction tube, after replacing the inside of the reaction vessel with nitrogen. The reaction solution is heated in an oil bath while being stirred so that the temperature of the reaction solution is set to 75°C.
After adding 3 parts of the emulsion (C1) thereto, 20 parts of an ammonium persulfate aqueous solution in which a concentration is adjusted to 10% by mass is further added thereto, and the reaction solution is retained for 30 minutes.
Thereafter, in a state where the temperature of the reaction solution is maintained at 75°C, the remaining emulsion (C1) is gradually added dropwise to the reaction vessel over 240 minutes by a pump.
After completion of the dropwise addition, the solution is retained for 60 minutes, 2 parts of ammonium persulfate having a concentration of 10% by mass is added thereto, and the mixture is retained for another 3 hours and then cooled to room temperature. The obtained dispersion of resin particles is sieved through a sieve with a 70 $\mu$m mesh to remove aggregates generated in the polymerization step, thereby obtaining a styrene-(meth)acrylate copolymer particle dispersion (C1). A volume-average particle size of the resin particles is 170 nm.

<Comparative Example 2>

A styrene-(meth)acrylate copolymer particle dispersion is produced in the same manner as in Example 1, except that, in the preparation of the emulsion (1-1), the amount of styrene is changed to 7.0 parts and the amount of n-butyl acrylate is changed to 63.0 parts, and in the preparation of the emulsion (1-2), the amount of styrene is changed to 16.8 parts and the amount of n-butyl acrylate is changed to 13.2 parts.

<Comparative Example 3>

A styrene-(meth)acrylate copolymer particle dispersion is produced in the same manner as in Example 1, except that, in the preparation of the emulsion (1-1), the amount of styrene is changed to 38.5 parts and the amount of n-butyl acrylate is changed to 31.5 parts, and in the preparation of the emulsion (1-2), the amount of styrene is changed to 18.6 parts and the amount of n-butyl acrylate is changed to 11.4 parts.

<Comparative Example 4>

A styrene-(meth)acrylate copolymer particle dispersion is produced in the same manner as in Example 1, except that the amount of 1,10-decanediol diacrylate is changed to 0.21 parts in the preparation of the emulsion (1-1), and the amount of 1,10-decanediol diacrylate is changed to 0.09 parts in the preparation of the emulsion (1-2).

<Evaluation of Suppression Property of Generation of Aggregates Over Time>

The obtained styrene-(meth)acrylate copolymer particle dispersion is stored in a chamber at 40°C for 1 month in a sealed state. Thereafter, 500 g of the dispersion is poured into a sieve with a 70 μm mesh and sieved, and aggregates remaining on the sieve are collected. The collected aggregates are dried in a chamber at 40°C for 1 day, and a weight thereof is measured.

A: weight of the dried aggregates is less than 0.5 g.
B: weight of the dried aggregates is 0.5 g or more and less than 2.5 g.
C: weight of the dried aggregates is 2.5 g or more and less than 6.0 g.
D: weight of the dried aggregates is 6.0 g or more.

<Evaluation of Bend Resistance>

The Bend resistance is evaluated by producing a toner using the obtained styrene-(meth)acrylate copolymer particle dispersion. The toner is produced by the following procedure.

[Preparation of Amorphous Polyester Resin Dispersion (1)]

· Terephthalic acid: 28 parts by mole
· Isophthalic acid: 15 parts by mole
· Suberic acid: 5 parts by mole
· Trimellitic anhydride: 2 parts by mole
· Propylene oxide (2 mol) adduct of bisphenol A: 6 parts by mole
· Propylene oxide (3 mol) adduct of bisphenol A: 44 parts by mole

The above-described materials are put in a reaction vessel equipped with a stirrer, a nitrogen introduction tube, a temperature sensor, and a rectifying column, the temperature is raised to 190°C for 1 hour, and dibutyltin oxide is added to the mixture in an amount of 1.2 parts with respect to 100 parts of the above-described materials. While the generated water is distilled off, the temperature is raised to 240°C for 6 hours, a dehydration condensation reaction is continued for 3 hours in the reaction solution retained at 240°C, and then the reactant is cooled to obtain an amorphous polyester resin (1).
The amorphous polyester resin (1) has an acid value of 11 and a glass transition temperature of 58°C.

· Amorphous polyester resin (1): 100 parts
· Methyl ethyl ketone: 60 parts
· Isopropanol: 10 parts
· 10% aqueous ammonia solution: 3.5 parts

The above-described materials are put in a jacketed reaction vessel equipped with a condenser, a thermometer, a water dripping device, and an anchor blade, and in a state in which the reaction tank is retained at a liquid temperature of 50°C in a water-circulation type thermostatic bath, the amorphous polyester resin (1) is dissolved while stirring and mixing the mixture at 100 rpm. Next, the water-circulation type thermostatic bath is set to 40°C, and a total of 300 parts of deionized water retained at 40°C is added dropwise to the reaction tank at a rate of 3 parts/min to cause phase inversion, thereby obtaining an emulsion.
The obtained emulsion is added to an eggplant flask, and the eggplant flask is set through a trap ball in an evaporator equipped with a vacuum control unit. While being rotated, the eggplant flask is heated in a hot water bath at 60°C, the pressure is reduced to 7 kPa with care to sudden boiling to remove the solvent, and then returned to normal pressure, and the eggplant flask is water-cooled to obtain a dispersion. Deionized water is added to the obtained dispersion, thereby obtaining an amorphous polyester resin dispersion (1) having a solid content of 20% by mass. A volume-average particle size of the amorphous polyester resin particles in the amorphous polyester resin dispersion (1) is 180 nm.

[Preparation of Crystalline Polyester Resin Particle Dispersion (1)]

· Dodecanedioic acid: 50 parts by mole
· 1,6-Hexanediol: 50 parts by mole

The above-described materials are put in a reaction vessel equipped with a stirrer, a nitrogen introduction tube, a temperature sensor, and a rectifying column, the temperature is raised to 160°C for 1 hour, and dibutyltin oxide is added to the mixture in an amount of 0.8 parts with respect to 100 parts of the above-described materials. While the generated water is distilled off, the temperature is raised to 180°C for 6 hours, and while maintaining the temperature at 180°C and stirring for 5 hours, the reaction is allowed to progress by refluxing in the container. Next, the temperature is slowly raised to 230°C under reduced pressure (3 kPa), and the reaction solution is stirred for 2 hours in a state of being retained at 230°C. Subsequently, the reactant is cooled. After cooling, solid-liquid separation is performed, and the solids are dried, thereby obtaining a crystalline polyester resin (1). A weight-average molecular weight of the crystalline polyester resin (1) is 29,000.

· Crystalline polyester resin (1): 100 parts
· Methyl ethyl ketone: 70 parts
· Isopropanol: 12 parts
· 10% aqueous ammonia solution: 3 parts

The above-described materials are put in a jacketed reaction vessel equipped with a condenser, a thermometer, a water dripping device, and an anchor blade, and in a state in which the reaction tank is retained at a liquid temperature of 80°C in a water-circulation type thermostatic bath, the crystalline polyester resin (1) is dissolved while stirring and mixing the mixture at 100 rpm. Next, the water-circulation type thermostatic bath is set to 60°C, and a total of 300 parts of deionized water retained at 60°C is added dropwise to the reaction tank at a rate of 3 parts/min to cause phase inversion, thereby obtaining an emulsion.

The obtained emulsion is added to an eggplant flask, and the eggplant flask is set through a trap ball in an evaporator equipped with a vacuum control unit. While being rotated, the eggplant flask is heated in a hot water bath at 60°C, the pressure is reduced to 7 kPa with care to sudden boiling to remove the solvent, and then returned to normal pressure, and the eggplant flask is water-cooled to obtain a dispersion. Deionized water is added to the dispersion, thereby obtaining a crystalline polyester resin particle dispersion (1) having a solid content of 20% by mass. A volume-average particle size of the crystalline polyester resin particles in the crystalline polyester resin particle dispersion (1) is 160 nm.

[Preparation of Colorant Particle Dispersion]

· Carbon black (Regal 330, manufactured by Cabot Corporation): 110 parts
· Anionic surfactant (NEOPELEX G-65, manufactured by Kao Corporation): 6 parts
· Deionized water: 300 parts

The above-described materials are mixed together and dispersed for 10 minutes using a homogenizer (ULTRA-TURRAX T50, manufactured by IKA). Deionized water is added to the obtained dispersion, thereby obtaining a colorant particle dispersion having a solid content of 20% by mass. A volume-average particle size of the colorant particles in the colorant particle dispersion is 220 nm.

[Preparation of Release Agent Particle Dispersion]

· Fischer-Tropsch wax (Sasol wax H1, manufactured by SASOL): 100 parts
· Anionic surfactant (NEOPELEX G-65): 6 parts
· Deionized water: 300 parts

The above-described materials are mixed together, heated to 100°C, and dispersed using a homogenizer (ULTRA-TURRAX T50). Furthermore, a dispersion treatment is performed using a Manton-Gaulin high-pressure homogenizer (manufactured by Gaulin Corporation), and deionized water is added to the dispersion, thereby obtaining a release agent particle dispersion having a solid content of 20% by mass.

A volume-average particle size of the release agent particles in the release agent particle dispersion is 230 nm.

[Production of Toner]

- Amorphous polyester resin dispersion (1) (solid content: 20% by mass): 28 parts
- Obtained styrene-(meth)acrylate copolymer particle dispersion (solid content: 30% by mass): 7 parts
- Crystalline polyester resin dispersion (solid content: 20% by mass): 19 parts
- Colorant particle dispersion (solid content: 20% by mass): 6 parts
- Release agent particle dispersion (solid content: 20% by mass): 8 parts
- Anionic surfactant (ELEMINOL MON-2): 0.7 parts
- Deionized water: 50 parts

The above-described materials are put in a reaction vessel equipped with a thermometer, a pH meter, and a stirrer, and the temperature of the reaction vessel is retained at 20°C and retained for 30 minutes while stirring at 150 rpm. Next, a 0.3N nitric acid aqueous solution is added thereto such that the pH is adjusted to 5.0, and then 2% aluminum sulfate aqueous solution is added thereto in a state in which the reaction solution is dispersed with a homogenizer (ULTRA-TURRAX T50). Next, in a state in which the reaction solution is stirred, the temperature thereof is raised to 45°C at a rate of 0.4°C/min and retained for 30 minutes.

Next, 29 parts of the amorphous polyester resin particle dispersion (1) is added thereto, and the mixture is retained for 30 minutes. Next, a 0.1N sodium hydroxide aqueous solution is added thereto such that the pH is adjusted to 8.5, and the reaction solution is retained for 15 minutes, heated to 80°C at a rate of 1°C/min while being continuously stirred, and retained at 80°C for 5 hours. Next, after cooling, solid-liquid separation, and washing of solid matter with deionized water, the solid matter is dried for 24 hours in a freeze vacuum dryer to obtain toner particles (1) having a volume-average particle size of 5.5 $\mu$m.

100 parts of the toner particles (1) and 2.0 parts of hydrophobic silica (manufactured by Nippon Aerosil Co., Ltd.; product name: RY200) are mixed with a Henshell mixer to obtain a toner (1).

Using DocuCentre Color 400 manufactured by FUJIFILM Business Innovation Corp., the obtained toner is used for printing out an unfixed image in a toner application amount adjusted to 13.5 g/m$^2$. As a recording medium, film synthetic paper (YUPO Paper, manufactured by YUPO CORPORATION) is used. The printed image is a 25 mm $\times$ 25 mm solid image having an image density of 100%. A fixing evaluation device is prepared by detaching a fixing device from Apeos PortIV C3370 manufactured by FUJIFILM Business Innovation Corp., and modifying the machine so that fixing temperature can be changed. In the fixing evaluation device, the nip width is 6 mm, the nip pressure is 1.6 kgf/cm$^2$, and the process speed is 175 mm/sec. The unfixed image is fixed at a temperature from 90°C to 180°C at an interval of 5°C, a fixed image with no image defect and image disorder due to peeling failure is bent and a load of 50 g is applied thereto, and the degree of image defect in the portion is observed. The fixing temperature at which the degree of image defect is at or above a level at which a practical problem is not observed even though a slight peeling of the image is observed is evaluated as the minimum fixing temperature.

A: minimum fixing temperature is lower than 130°C.
B: minimum fixing temperature is 130°C or higher and lower than 140°C.
C: minimum fixing temperature is 140°C or higher and lower than 150°C.
D: minimum fixing temperature is 150°C or higher.

[Table 1]

| | Resin particles | | | | | | | | | | | | | Production method | | | Surface layer | | Evaluation | |
| | Styrene | | (Meth)acrylate compound | | | Crosslinking agent | | Surfactant | | Measured value | | | | | | | Measured value | | | |
| | Mass ratio (% by mass) | Tg (°C) | Type | Mass ratio (% by mass) | Tg (°C) | Type | Amount of crosslinking agent (% by mass) | Type | Amount of surfactant (% by mass) | Tgl (°C) | Storage elastic modulus G' at 40°C (Pa) | THF-insoluble) fraction (% by mass) | Volume-average particle size (nm) | Tg3 (°C) | Tg4 (°C) | Tg4 Tg3 (°C) | Tg2 (°C) | Tg2 - Tg1 (°C) | Amount of aggregates | Bend Resistance |
|---|---|---|---|---|---|---|---|---|---|---|---|---|---|---|---|---|---|---|---|---|
| Example 1 | 46.6 | 100 | n-Butyl acrylate | 53.4 | -55 | 1,10-Decanediol diacrylate | 1.0 | ELEMINOL MON-2 | 1.5 | -2.6 | $9.8 \times 10^5$ | 95 | 165 | -11.5 | 20.7 | 32.2 | 20.7 | 23.3 | A | A |
| Example 2 | 55.0 | 100 | n-Butyl acrylate | 45.0 | -55 | 1,10-Decanediol diacrylate | 1.0 | ELEMINOL MON-2 | 1.5 | 96 | $9.2 \times 10^6$ | 96 | 168 | 7.3 | 15.0 | 77 | 15.0 | 5.4 | A | C |
| Example 3 | 25.75 | 100 | n-Butyl acrylate | 74.25 | -55 | 1,10-Decanediol diacrylate | 1.0 | ELEMINOL MON-2 | 1.5 | -28.9 | $3.2 \times 10^5$ | 96 | 172 | -42.6 | 10.3 | 52.9 | 10.3 | 39.2 | C | A |
| Example 4 | 54.7 | 100 | n-Butyl acrylate | 53.4 | -55 | 1,10-Decanediol diacrylate | 1.0 | ELEMINOL MON-2 | 1.5 | 9.1 | $9.0 \times 10^6$ | 95 | 176 | -3.5 | 43.7 | 47.2 | 43.7 | 34.6 | A | C |
| Example 5 | 46.6 | 100 | n-Butyl acrylate | 53.4 | -55 | 1,10-Decanediol diacrylate | 0.5 | ELEMINOL MON-2 | 1.5 | -2.6 | $7.5 \times 10^5$ | 81 | 177 | -11.5 | 20.7 | 32.2 | 11.2 | 13.8 | C | A |
| Example 6 | 46.6 | 100 | n-Butyl acrylate | 53.4 | -55 | 1,6-Hexanediol methacrylate | 1.0 | ELEMINOL MON-2 | 1.5 | -2.6 | $8.9 \times 10^5$ | 92 | 170 | -11.5 | 20.7 | 32.2 | 17.3 | 19.9 | B | A |
| Example 7 | 46.6 | 100 | n-Butyl acrylate | 53.4 | -55 | 1,10-Decanediol diacrylate | 1.0 | ELEMINOL MON-2 | 0.4 | -2.6 | $1.1 \times 10^6$ | 96 | 180 | -11.5 | 20.7 | 32.2 | 20.7 | 23.3 | C | A |
| Example 8 | 46.6 | 100 | n-Butyl acrylate | 53.4 | -55 | 1,10-Decanediol diacrylate | 1.0 | EMULGEN 430 | 1.5 | -2.6 | $1.0 \times 10^6$ | 96 | 181 | -11.5 | 20.7 | 32.2 | 17.1 | 19.7 | B | A |

| | Resin particles | | | | | | | | | | | | | | Production method | | | Surface layer Measured value | | Evaluation | |
| | Styrene | | (Meth)acrylate compound | | | Crosslinking agent | | Surfactant | | Measured value | | | | | | | | | | | |
| | Mass ratio (% by mass) | Tg (°C) | Type | Mass ratio (% by mass) | Tg (°C) | Type | Amount of crosslinking agent (% by mass) | Type | Amount of surfactant (% by mass) | Tgl (°C) | Storage elastic modulus G' at 40°C (Pa) | THF-insoluble) fraction (% by mass) | Volume-average particle size (nm) | Tg3 (°C) | Tg4 (°C) | Tg4 Tg3 (°C) | Tg2 (°C) | Tg2 - Tg1 (°C) | Amount of aggregates | Bend Resistance |
|---|---|---|---|---|---|---|---|---|---|---|---|---|---|---|---|---|---|---|---|---|
| Example 9 | 46.6 | 100 | n-Butyl acrylate | 53.4 | -55 | 1,10-Decanediol diacrylate | 1.0 | ELEMINOL MON-2 | 1.5 | -2.6 | $9.7 \times 10^5$ | 96 | 77 | -11.5 | 20.7 | 32.2 | 22.1 | 24.7 | C | A |
| Example 10 | 46.6 | 100 | n-Butyl acrylate | 53.4 | -55 | 1,10-Decanediol diacrylate | 1.0 | ELEMINOL MON-2 | 1.5 | -2.6 | $1.0 \times 10^6$ | 95 | 310 | -11.5 | 20.7 | 32.2 | 12.2 | 14.8 | C | A |
| Example 11 | 19.9 | 100 | Ethyl acrylate | 80.1 | -20 | 1,10-Decanediol diacrylate | 1.0 | ELEMINOL MON-2 | 1.5 | -2.7 | $3.5 \times 10^6$ | 92 | 166 | -11.6 | 20.6 | 32.2 | 16.5 | 19.2 | B | B |
| Example 12 | 54.7 | 100 | 2-Ethylhexyl acrylate | 45.3 | -70 | 1,10-Decanediol diacrylate | 1.0 | ELEMINOL MON-2 | 1.5 | -2.6 | $77 \times 10^5$ | 94 | 165 | -11.6 | 21.2 | 32.8 | 162 | 18.8 | B | A |
| Comparative Example 1 | 46.6 | 100 | n-Butyl acrylate | 53.4 | -55 | 1,10-Decanediol diacrylate | 1.0 | ELEMINOL MON-2 | 1.5 | -2.6 | $9.9 \times 10^5$ | 95 | 175 | -2.6 | -2.6 | 0.0 | -2.6 | 0.0 | D | A |
| Comparative Example 2 | 23.8 | 100 | n-Butyl acrylate | 76.2 | -55 | 1,10-Decanediol diacrylate | 1.0 | ELEMINOL MON-2 | 1.5 | -31.1 | $9.5 \times 10^5$ | 96 | 172 | -45.5 | 11.1 | 56.6 | 11.1 | 42.2 | D | D |
| Comparative Example 3 | 57.1 | 100 | n-Butyl acrylate | 42.9 | -55 | 1,10-Decanediol diacrylate | 1.0 | ELEMINOL MON-2 | 1.5 | 12.8 | $1.2 \times 10^7$ | 96 | 171 | 9.6 | 20.7 | 11.1 | 20.7 | 7.9 | A | D |
| Comparative Example 4 | 46.6 | 100 | n-Butyl acrylate | 53.4 | -55 | 1,10-Decanediol diacrylate | 0.3 | ELEMINOL MON-2 | 1.5 | -2.6 | $3.5 \times 10^5$ | 73 | 177 | -11.5 | 20.7 | 32.2 | 8.1 | 10.7 | D | A |

As shown in Table 1, the resin particles of Examples are excellent in both the suppression of generation of aggregates over time and the bend resistance, as compared with the resin particles of Comparative Examples.

(((1))) Resin particles of a styrene-(meth)acrylate-based copolymer,

wherein, in a case where a glass transition temperature obtained by a Fox equation from a ratio of constituent monomers of entire resin particles is denoted by Tg1 and a glass transition temperature obtained by a Fox equation from a ratio of the constituent monomers calculated from surface analysis of the resin particles is denoted by Tg2, all of the following expression A, expression B, and expression C are satisfied, and a tetrahydrofuran-insoluble fraction is 80% by mass or more,

$$Tg1 < 10°C \qquad \text{expression A,}$$

$$Tg2 > 10°C \qquad \text{expression B,}$$

$$0°C < Tg2 - Tg1 < 40°C \quad \text{expression C.}$$

(((2))) The resin particles according to (((1))),
wherein a volume-average particle size is 80 nm or more and less than 300 nm.
(((3))) The resin particles according to (((1))) or (((2))),
wherein a storage elastic modulus G' at 40°C is $1 \times 10^5$ Pa or more and $1 \times 10^7$ Pa or less.
(((4))) A method for producing resin particles of a styrene-(meth)acrylate-based copolymer, comprising:

performing polymerization by adding a plurality of emulsions containing a styrene monomer and a (meth)acrylate monomer and having different ratios of the monomers in multiple stages,
wherein, in a case where a glass transition temperature obtained by a Fox equation from a ratio of constituent monomers of an emulsion at a point in time when the emulsion is added with a monomer amount of 70% by mass with respect to a constituent monomer amount of entire resin particles to be obtained is denoted by Tg3 and a glass transition temperature obtained by a Fox equation from a ratio of constituent monomers of an emulsion added after the point in time is denoted by Tg4, all of the following expression D, expression E, and expression F are satisfied,

$$-45°C < Tg3 < 10°C \qquad \text{expression D,}$$

$$Tg4 > 10°C \qquad \text{expression E,}$$

$$5°C < Tg4 - Tg3 < 60°C \quad \text{expression F.}$$

(((5))) The method for producing resin particles according to (((4))),

wherein, in the polymerization, a surfactant is added, and
an addition amount of the surfactant is 0.5% by mass or more and less than 3.0% by mass with respect to a total mass of the resin particles to be obtained.

(((6))) An aqueous dispersion comprising:
the resin particles according to any one of (((1))) to (((3))).
(((7))) Powder particles comprising:
the resin particles according to any one of (((1))) to (((3))).
(((8))) A resin composition comprising:
the resin particles according to any one of (((1))) to (((3))).
(((9))) An electrostatic charge image developing toner comprising:
the resin particles according to any one of (((1))) to (((3))).

According to (((1))), there are provided resin particles that can achieve both suppression of generation of aggregates over time and bend resistance, as compared with a case in which, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, at least any one of the expression A, the expression B, or the expression C is not satisfied, or a case in which a tetrahydrofuran-insoluble fraction is less than 80% by mass.

According to (((2))), there are provided resin particles having more excellent suppression property of generation of aggregates over time, as compared with a case where the volume-average particle size is less than 80 nm or 300 nm or more.

According to (((3))), there are provided resin particles that can further achieve both suppression of generation of aggregates over time and bend resistance, as compared with a case where the storage elastic modulus G' at 40°C is less than $1 \times 10^5$ Pa or more than $1 \times 10^7$ Pa.

According to (((4))), there is provided a method for producing resin particles that can further achieve both suppression of generation of aggregates over time and bend resistance, as compared with a case of in which, in a case where a glass transition temperature obtained by a Fox equation from a ratio of constituent monomers of an emulsion at a point in time when the emulsion is added with a monomer amount of 70% by mass with respect to a constituent monomer amount of the entire resin particles to be obtained is denoted by Tg3 and a glass transition temperature obtained by a Fox equation from a ratio of constituent monomers of an emulsion added after the point in time is denoted by Tg4, at least any one of the expression D, the expression E, or the expression F is not satisfied.

According to (((5))), there is provided a method for producing resin particles having more excellent suppression property of generation of aggregates over time, as compared with a case where, in the polymerization, a surfactant is added, and an addition amount of the surfactant is less than 0.5% by mass or 3.0% by mass or more with respect to the total mass of the resin particles to be obtained.

According to (((6))), (((7))), (((8))), or (((9))), there is provided an aqueous dispersion, powder particles, a resin composition, or an electrostatic charge image developing toner, each of which uses resin particles that can achieve both suppression of generation of aggregates over time and bend resistance, as compared with a case of using resin particles in which, in a case where a glass transition temperature obtained by a Fox equation from a ratio of constituent monomers of the entire resin particles is denoted by Tg1 and a glass transition temperature obtained by a Fox equation from a ratio of the constituent monomers calculated from surface analysis of the resin particles is denoted by Tg2, at least any one of the expression A, the expression B, or the expression C is not satisfied, or a case of resin particles in which a tetrahydrofuran-insoluble fraction is less than 80% by mass.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

**Claims**

1. Resin particles of a styrene-(meth)acrylate-based copolymer,

   wherein, in a case where a glass transition temperature obtained by a Fox equation from a ratio of constituent monomers of entire resin particles is denoted by Tg1 and a glass transition temperature obtained by a Fox equation from a ratio of the constituent monomers calculated from surface analysis of the resin particles is denoted by Tg2, all of the following expression A, expression B, and expression C are satisfied, and a tetrahydrofuran-insoluble fraction is 80% by mass or more,

$$\mathrm{Tg1} < 10°C \qquad \text{expression A,}$$

$$\mathrm{Tg2} > 10°C \qquad \text{expression B,}$$

$$0°C < \mathrm{Tg2 - Tg1} < 40°C \quad \text{expression C.}$$

2. The resin particles according to claim 1,

wherein a volume-average particle size is 80 nm or more and less than 300 nm.

3. The resin particles according to claim 1 or 2,
   wherein a storage elastic modulus G' at 40°C is $1 \times 10^5$ Pa or more and $1 \times 10^7$ Pa or less.

4. A method for producing resin particles of a styrene-(meth)acrylate-based copolymer, comprising:

   performing polymerization by adding a plurality of emulsions containing a styrene monomer and a (meth)acrylate monomer and having different ratios of the monomers in multiple stages,
   wherein, in a case where a glass transition temperature obtained by a Fox equation from a ratio of constituent monomers of an emulsion at a point in time when the emulsion is added with a monomer amount of 70% by mass with respect to a constituent monomer amount of entire resin particles to be obtained is denoted by Tg3 and a glass transition temperature obtained by a Fox equation from a ratio of constituent monomers of an emulsion added after the point in time is denoted by Tg4, all of the following expression D, expression E, and expression F are satisfied,

   $$-45°C < Tg3 < 10°C \qquad \text{expression D,}$$

   $$Tg4 > 10°C \qquad \text{expression E,}$$

   $$5°C < Tg4 - Tg3 < 60°C \quad \text{expression F.}$$

5. The method for producing resin particles according to claim 4,

   wherein, in the polymerization, a surfactant is added, and
   an addition amount of the surfactant is 0.5% by mass or more and less than 3.0% by mass with respect to a total mass of the resin particles to be obtained.

6. An aqueous dispersion comprising:
   the resin particles according to any one of claims 1 to 3.

7. Powder particles comprising:
   the resin particles according to any one of claims 1 to 3.

8. A resin composition comprising:
   the resin particles according to any one of claims 1 to 3.

9. An electrostatic charge image developing toner comprising:
   the resin particles according to any one of claims 1 to 3.

Europäisches
Patentamt

European
Patent Office

Office européen
des brevets

# EUROPEAN SEARCH REPORT

**Application Number**

EP 25 16 4068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/135650 A1 (MOFFAT KAREN A [CA] ET AL) 22 June 2006 (2006-06-22)<br>* claims 1-20 *<br>* paragraphs [0003] - [0005], [0009] *<br>* paragraph [0017] *<br>* paragraphs [0019] - [0020], [0022] * | 1-9 | INV.<br>G03G9/087<br>C08F212/08<br>C08F220/12<br>C08F220/14<br>C09D125/04 |
| A | CN 101 092 467 A (GUANGHUI CHEMICAL CO LTD [CN]) 26 December 2007 (2007-12-26)<br>* claims 1-10 * | 1-9 | |

**TECHNICAL FIELDS SEARCHED (IPC)**

G03G
C09J
C08F
C09D

The present search report has been drawn up for all claims

| Place of search | Date of completion of the search | Examiner |
|---|---|---|
| The Hague | 17 July 2025 | Weiss, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4068

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2025

| Patent document cited in search report | Publication date | Patent family member(s) | Publication date |
|---|---|---|---|
| US 2006135650 A1 | 22-06-2006 | NONE | |
| CN 101092467 A | 26-12-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021189408 A
- JP 2023047238 A
- JP 5043608 A
- JP H543608 A
- JP 5222267 A
- JP H5222267 A
- JP 7018003 A
- JP H718003 A

**Non-patent literature cited in the description**

- Ultrafine Particles and Materials. Shokabo Publishing Co., Ltd., 1993
- Production and Application of Fine Particles and Powders. CMC Publishing Co., Ltd., 2005